# EUROPÄISCHE PATENTANMELDUNG

(11) **EP 0 687 077 A2**
(43) Veröffentlichungstag der Anmeldung: **13.12.1995**
(21) Anmeldenummer: 95108192.6
(22) Anmeldetag: 29.05.1995
(51) Int. Cl.: H04B 7/26

(54) **Intelligentes Frequenzsprungverfahren anwendendes Funkübertragungssystem mit beweglichen Funkstationen**

(30) Priorität: 06.06.1994 DE 4419749
(71) Anmelder: SIEMENS AKTIENGESELLSCHAFT, D-80333 München (DE)
(72) Erfinder: Ritter, Gerhard, Dipl.-Ing., D-86943 Thaining (DE)

(57) **Zusammenfassung**

Es wird ein Funkübertragungssystem zum Einsatz bei wireless local loop- und handheld-Anwendungen beschrieben. Es ist gekennzeichnet durch ein intelligentes Frequenzsprungverfahren, bei dem für jede Übertragungsrichtung die optimalen Frequenzen für eine Übertragung von bzw. zu den Teilnehmerstationen bestimmt werden und eine entsprechende optimale Zuteilung der Frequenzen zu den Verbindungen erfolgt.

## Beschreibung

Die Erfindung bezieht sich auf ein Funkübertragungssystem mit mindestens einer ortsfesten Funkstation und mehreren beweglichen Funkstationen (Teilnehmergeräte) sowie Funkübertragungskanälen.

In jedem Mobilfunksystem stellt aus physikalischen Gründen die Luftschnittstelle den entscheidenden Engpaß dar. Nur durch eine Optimierung dieser Luftschnittstelle läßt sich ein System wirklich entscheidend verbessern und optimieren. Bei den restlichen Systemkomponenten bestehen größere Freiheitsgrade, welche zur Optimierung nach verschiedenen Gesichtspunkten genützt werden können.

Es ist bekannt, daß schmalbandige Systeme niedrige Komplexität aufweisen, aber andererseits unter Fadingbedingungen Performance-Verschlechterungen zeigen. Breitbandige Systeme erzielen bessere Performance- und Fadingbedingungen, besitzen jedoch höhere Komplexität.

Betrachtet man die Übertragungscharakteristik eines Übertragungskanals im Frequenzbereich, so sind ausgeprägte Maxima und Minima erkennbar. Je breitbandiger ein System ist, umso besser gelingt es ihm, diese Schwankungen im Frequenzbereich auszumitteln.

Schmalbandige Systeme unterliegen starken Schwankungen zwischen den Maxima und Minima. Für jede Verbindung kann abhängig vom augenblicklichen Übertragungskanal eine optimale Frequenz angegeben werden, für die die Dämpfung am geringsten ist. Dieses Dämpfungsminimum ist abhängig von der Breite des betrachteten Frequenzbandes. Dieses Minimum erlaubt wesentlich geringere Dämpfungen als sie für den Mittelwert auftreten.

Bestehen zu einer Basisstation mehrere Funkverbindungen, so sind die Übertragungskanäle zwischen den einzelnen Teilnehmern statistisch unabhängig. Bei nicht bewegten Teilnehmern kann damit für jede Verbindung die optimale Frequenz angegeben werden. Mit zunehmender Geschwindigkeit der Teilnehmer steigt die Änderungsgeschwindigkeit der jeweiligen Übertragungskanäle. Bei niedrigen Geschwindigkeiten, wie z.B. Handheld-Anwendungen, ergibt sich noch für relativ lange Zeiten ein quasistationäres Verhalten der Übertragungskanäle.

Der Erfindung liegt die Aufgabe zugrunde, ein Mobilfunksystem für drahtlosen Teilnehmeranschluß und für Handheld-Anwendungen zu schaffen, das die vorstehend genannten Bedingungen in vorteilhafter Weise nützt, um die Übertragungsqualität, den Leistungsbedarf und die Störfestigkeit zu erhöhen und um gleichzeitig durch eine geringe momentane Bandbreite die Komplexität und damit die Kosten gering zu halten.

Diese Aufgabe wird mit einem Funkübertragungssystem der eingangs beschriebenen Art gemäß der Erfindung gelöst durch ein intelligentes Frequenzspruchverfahren, bei dem für jede Übertragungsrichtung die optimalen Frequenzen für eine Übertragung von bzw. zu den Teilnehmerstationen bestimmt werden und eine entsprechende optimale Zuteilung der Frequenzen zu den Verbindungen erfolgt.

Das erfindungsgemäße System, das ein relativ breites Anwendungsspektrum abdecken kann und neben den Standardanwendungen, wie Sprach- und Datenübertragung, den Einsatz für ISDN und auch ATM erlaubt, zeichnet sich aus durch hohe Flexibilität in den Datenraten, hohe spektrale Effizienz und geringen Aufwand. Durch das intelligente Frequenzsprungverfahren werden auf der Luftschnittstelle erhebliche Gewinne gegenüber bisher üblichen Systemauslegungen erzielt, die versuchen, über breitbandige Übertragungsverfahren oder statistische Verfahren, wie frequency hopping, Verbesserungen zu erzielen. Dies betrifft sowohl das Rayleigh-Fading als auch Störungen aus Nachbarzellen. Weiter ist das System auf möglichst geringen Aufwand insbesondere auf der Analogseite optimiert.

Vorteilhafte Ausgestaltungen und Weiterbildungen des Erfindungsgegenstandes sind in den Unteransprüchen angegeben.

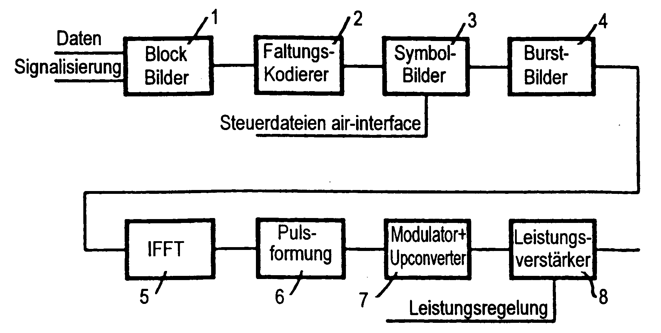

Nachstehend wird die Erfindung anhand eines in der Zeichnung dargestellten Ausführungsbeispiels näher erläutert.

Der Beschreibung des Systems anhand eines Blockschaltbildes, das die Signalverarbeitung des Senders zeigt, werden noch einige Ausführungen über das Übertragungsverfahren vorangestellt. Hierbei ist zur Erzielung guter Systemeigenschaften die Verwendung einer größeren Anzahl schmalbandiger Übertragungskanäle wichtig. Für den Pegel und die Störungen auf all diesen Kanälen sind in jeder Teilnehmerstation Meßmöglichkeiten erforderlich. Zudem ist es von Bedeutung, daß ein sehr schneller Frequenzwechsel möglich ist. Hierfür ist der Einsatz einer digitalen FFT (fast fourier transform) und IFFT (inverse fast fourier transform) auf der Empfangs- bzw. Sendeseite vorgesehen. Dabei läßt sich eine einzige FFT-Hardware durch die Wahl eines Parameters zwischen beiden Betriebsarten FFT und IFFT umschalten. Die FFT nimmt eine Transformation vom Zeitbereich in den Frequenzbereich vor und die IFFT die inverse Transformation vom Frequenzbereich in den Zeitbereich. Die FFT und IFFT sind wegen Einsparungen im Rechenaufwand im wesentlichen auf Potenzen von 2 beschränkt. Nimmt man als Beispiel auf Seiten der Basisstation für das downlink eine IFFT mit 128 diskreten Eingangsfrequenzen - für die Eingangsfrequenzen muß jeweils eine komplexe Größe entsprechend der Amplitude und der Phasenlage generiert werden - an, so liefert diese IFFT das zugehörige Zeitsignal, welches über D/A-Wandlung und Aufwärtsmischung in die entsprechende Frequenzlage gebracht werden muß. Man erhält dann maximal 128 diskrete Frequenzen im Ausgangssignal, deren Amplituden und Phasen durch die an die IFFT angelegten Werte bestimmt sind. Auf der Empfangsseite, dem Teilnehmerterminal, werden alle 128 Frequenzen in ein Basisband oder eine niedrige Zwischenfrequenz umgesetzt, A/D-gewandelt und anschließend einer FFT-Verarbeitung zugeführt. Am Ausgang dieser FFT-Verarbeitung erhält man die Amplituden und die Phasen der 128 Eingangsfrequenzen wieder zurück. Eine Übertragung kann damit auf einer oder mehreren der 128 Frequenzen erfolgen. Damit ist also eine flexible Anpassung der Datenrate, abhängig davon, wieviele Frequenzen für eine Verbindung verwendet werden, mit diesem Verfahren möglich. Es erlaubt zudem einen extrem schnellen Frequenzwechsel, da lediglich über einen digitalen Multiplexer die für eine Verbindung vorgesehenen Informationen an den entsprechenden Eingang der IFFT gelegt und auf der Empfangsseite vom Ausgang der FFT abgenommen werden müssen. Auf Seiten des Teilnehmerterminals stehen die Amplitudeninformationen aller Frequenzen zur Verfügung und es kann leicht bestimmt werden, welche Frequenz mit dem maximalen Pegel empfangen wird. Zur Vermeidung einer Verfälschung der Amplitudeninformation durch die Nutz-Modulation wird eine reine Phasenmodulation verwendet.

Die Signalübertragung erlaubt eine weitere Einsparung, die im folgenden erklärt wird: Jeder Mobilfunkkanal läßt sich durch seinen Delay-Spread beschreiben. Einschwingvorgänge dieses Kanals erfolgen durch diesen Delay-Spread und sind nach der Dauer des Delay-Spreads abgeklungen. Sendet man die 128 Frequenzen für die Dauer der erforderlichen Abtastzeit für die FFT-Verarbeitung plus die Dauer des Delay-Spreads und wertet erst nach der Dauer des Delay-Spreads aus, so ist kein Entzerrer für den Mobilfunkkanal, wie z.B. im GSM-System erforderlich. Weiter steigt die Nachbarkanalunterdrückung in der FFT-Verarbeitung an, wenn alle Signale exakt auf den Nullstellen der einzelnen FFT-Filter plaziert sind, was während der Einschwingphase der Kanäle nicht gegeben ist. Man kommt damit ohne Entzerrer aus.

Der Einsatz der FFT auf der Empfangsseite hat den Vorteil, daß die Nachbarkanalstörungen bei diesem Verfahren eliminiert werden, da alle FFT-Filter eine sinx/x-Charakteristik besitzen, wobei die Nullstellen auf den Frequenzen der Nachbarkanäle liegen.

Für den Sendeteil ist jeweils eine IFFT-Verarbeitung erforderlich, während auf der Empfangsseite eine FFT-Verarbeitung notwendig ist. Mit der Möglichkeit, eine FFT-Hardware durch eine einfache Parameteränderung für eine IFFT-Verarbeitung verwenden zu können, bietet sich eine TDD-Betriebsweise an. Hierdurch kann die FFT-Hardware doppelt ausgenutzt werden. Diese Betriebsweise hat den weiteren Vorteil, daß durch die Reziprozität des Übertragungskanals die optimale Frequenz für beide Übertragungsrichtungen identisch ist.

Aufgrund des relativ statischen Charakters der einzelnen Übertragungsstrecken können höherstufige Modulationsverfahren angewendet werden. Damit ergibt sich als optimales Übertragungsverfahren die Übertragung einzelner phasenmodulierter Symbole.

Die Unterdrückung der Störungen aus anderen Zellen wird zum einen durch das intelligente Frequenzsprungverfahren gesichert, welches jeder Verbindung möglichst die am wenigsten gestörte Frequenz zuweist. Weiter toleriert ein 8-PSK-Verfahren, von dem hier ausgegangen wird, eine höhere Störleistung bei einer diskreten Störung als bei dem Vorliegen einer Rauschstörung. Durch die schmalbandige Auslegung sind Störungen in erster Linie diskrete Störungen.

Das Blockschaltbild für den Sender besteht aus der Hintereinanderschaltung folgender Baugruppen: Blockbilder 1, Faltungscodierer 2, Symbolbildung 3, Burstbilder 4, IFFT 5, Pulsformung 6, Modulator + Upconverter 7 und Leistungsverstärker 8. Im Sender werden die Verkehrsdaten von beispielsweise 16 kbits/sec und die verkehrsbezogene Signalisierung von z.B. 4 kbits/sec im Blockbilder 1 zu Blöcken von 120 Bits zusammengefaßt. Jeder Block wird um 9 Tail-Bits erweitert, um einen definierten Endzustand für den Decoder zu erreichen. Diese Blöcke werden mit einer Rate von 1/2 und einer constraint length von 9 im Faltungscodierer 2 faltungscodiert. Die faltungscodierten Blöcke werden mit Blockinterleaving in der Symbolbildung 3 zu Symbolen von je 3 Bits zusammengefaßt. Es ergeben sich dabei 83 Symbole am Burstende. Der Burstanfang mit 4 Synchronisationssymbolen wird als Vorspann gebildet; weiter wird die Signalisierung zur Steuerung des air-interfaces mit 17 Symbolen von der Ablaufsteuerung geliefert und in der Symbolbildung 3 zwischen den Synchronisationssymbolen und den Nutzsymbolen eingefügt. Diese Symbole werden nicht der Faltungscodierung unterworfen, sondern werden in der Ablaufsteuerung blockcodiert.

Der so gebildete Burst wird sequentiell der 128 Punkte IFFT 5 über einen Multiplexer zugeführt. Abhängig davon, an welchen Eingang der IFFT die Daten angelegt werden - für jedes Symbol ein komplexer Vektor der Amplitude 1 und einer Phase entsprechend der gewählten 8-PSK-Modulation (z.B. Gray-Codierung) - ergibt sich die jeweilige Frequenz am Ausgang der IFFT 5. Für die Frequenzen, welche nicht verwendet werden, sind Nullvektoren am Eingang anzulegen. Es ergibt sich am Ausgang jeweils eine Sinusschwingung mit 128 Abtastwerten im Zeitbereich und einer Phase entsprechend der Phase des am Eingang angelegten Vektors.

Für eine reine Sprachübertragung, z.B. mit einem Standard-Speach-Coder wird nur eine Frequenz verwendet und es werden nur an einen Eingang Vektoren angelegt. Werden mehrere Frequenzen verwendet, müssen die entsprechenden Vektoren an die jeweiligen Frequenzeingänge angelegt werden und es ergeben sich am Ausgang entsprechend mehr Sinusschwingungen mit den entsprechenden Phasen.

Hinsichtlich der Modulation wird hierbei eine 8-PSK-Modulation verwendet, wobei jeweils 3 Bits zu einem Symbol zusammengefaßt sind. Die Modulation erfolgt dadurch, daß in einer Tabelle die komplexen Vektoren für die möglichen Symbole abgelegt sind. Diese Modulationstabelle hat damit eine Größe von acht komplexen Werten, d.h. 8 x 2 Werte. Der komplexe Vektor wird an den Eingang der IFFT-Verarbeitung angelegt. Am Ausgang der IFFT erhält man eine Sinus-Schwingung entsprechender Frequenz und entsprechender Phasenlage. Die Übertragung der Sinus-Schwingung erfolgt länger als es für ein Symbol erforderlich wäre, damit einerseits der Kanal einschwingen kann und andererseits wird eine Pulsformung vorgenommen, um die benötigte Bandbreite zu reduzieren. Hierzu wird die Amplitude für alle Signale gleichzeitig mit einem Cosinusverlauf gewichtet. Auf der Empfangsseite wird dann nur ein Ausschnitt am Ende des übertragenen Symbols ausgewertet. Für diesen Ausschnitt ist der Kanal sicher eingeschwungen und die Modulation für die spektrale Formung nicht vorhanden.

Es wird eine 128-Punkte-FFT bzw. -IFFT eingesetzt, wobei aus Überfaltungsgründen nicht alle Frequenzen verwendet werden. Verwendet man nur 100 Frequenzen, so wird eine Bandbreite von 5 MHz belegt. Diese belegte Bandbreite stellt die maximal von einer Basisstation belegte Bandbreite dar, wobei natürlich jederzeit geringere Bandbreiten bei entsprechend geringerer Kapazität der Basisstation verwendet werden können.

Ein zeitliches Interleaving wird bei diesem Verfahren nicht benötigt. Es fällt damit nicht die entsprechende Verzögerungszeit an. Als Codierung ist eine Faltungscodierung mit der Rate 1/2 und der constraint length 9 vorgesehen. Die gesamte Verzögerungszeit setzt sich zusammen aus der Zeit für die Codierung und Modulation der Daten, der Übertragungszeit von 3 msec und der Decodierzeit von ca. einer Burstdauer.

Von den 100 zur Verfügung stehenden Frequenzen werden 4 Frequenzen für Kontrollkanäle verwendet, damit verbleiben noch 96 Kanäle für das Verkehrsaufkommen. Die Kontrollkanäle ändern ihre Frequenz nicht, da ihre Informationen alle Teilnehmer erreichen müssen. Um dies sicherzustellen, wird im Downlink auf allen Kontrollkanälen die gleiche Information übertragen. Die Teilnehmerstation hat damit die Möglichkeit zu einem frequency diversity. Im einfachsten Fall wird dies realisiert als switched diversity durch Auswahl der besten Frequenz. Im Uplink z.B. für einen random access verwendet die Teilnehmerstation die Frequenz, welche mit dem maximalen Pegel empfangen wird. Dies ist dann auch die Frequenz, bei der maximale Empfangsleistung an der Basisstation errreicht wird. Die Frequenzen werden äquidistant gewählt und haben damit einen Abstand von 1 MHz bei einer gesamten belegten Bandbreite durch die Basisstation von 5 MHz. Diese Frequenzen werden auf dem Downlink verwendet für frequency correction, synchronisation, Steuerung der Teilnehmerstationen, statistisches Multiplexen und dispatch table und auf dem Uplink für random access, Verbindungsanforderung und Quittierung.

Die einzelnen Teilnehmerstationen werden auf dem Uplink zeitlich sehr genau auf die Basisstation aufsynchronisiert. Dies ist notwendig, da die Signale aller Teilnehmer mit einem einzigen Empfänger verarbeitet werden und die Trennung der Signale in der digitalen FFT erfolgt. Damit muß jedes Signal möglichst exakt in das Auswertefenster fallen. Sie erhalten daher von der Basisstation entsprechende Korrekturwerte zugewieseen, um wieviel Takte ihr Sendertiming gegenüber dem Empfängertiming zu versetzen ist.

Zur Erstsynchronisation der Teilnehmerstationen sucht die Teilnehmerstation den am besten zu empfangenden Kontrollkanal aus. Als nächstes führt sie eine Synchronisation auf den Symboltakt durch. Danach synchronisiert sie sich auf das Rahmen-Timing auf und gibt die Frequenzsynchronisation auf das Empfangssignal frei. Damit ist die Synchronisation auf dem Downlink erfolgt. Die Synchronisation für das Uplink kann nur durch die Basisstation vorgenommen werden. Damit überhaupt eine Verbindung auf dem Uplink mit der Basisstation aufgenommen werden kann, ist es notwendig, daß für den Random Access Burst mit der halben Datenrate gearbeitet wird. Dann ist eine Datenübertragung auch bei nichtvorhandener Synchronisation möglich. Die Basisstation fordert daraufhin die Teilnehmerstation zur Übertragung eines Synchronisationsbursts auf. In diesem Synchronisationsburst erfolgt die Datenübertragung etwas langsamer als im normalen Burst, so daß alle Kombinationen des Symboltimings und des Auswerte-Timings auftreten. Die Basisstation kann hieraus die optimale Kombination bestimmen und gibt an die Teilnehmerstation den erforderlichen Versatz zwischen Sender-Timing und Empfänger-Timing zurück. Damit ist die Synchronisation des air-interfaces abgeschlossen. Dieses Timing wird in einem nichtflüchtigen Speicher abgelegt und kann bei einem erneuten Zugriff als Ausgangswert verwendet werden. Es kann dann der eigentliche Verbindungsaufbau mit der Authentifizierung von Teilnehmer und Basisstation beginnen.

Für das Downlink wird keine Leistungsregelung verwendet. Eine Regelung würde das vorgesehene intelligente Frequenzsprungverfahren stören. Für das Uplink ist eine Leistungsregelung vorgesehen, um die Pegelunterschiede an der Basisstation zu reduzieren und der digitalen Verarbeitung im FFT optimale Verhältnisse zu bieten.

Beim Frequenzsprungverfahren bestimmt jede Teilnehmerstation ständig die Eignung aller Frequenzen für eine Übertragung durch die Bestimmung der relativen Streuung. Hierzu wird in jedem Uplink-Burst eine Liste der drei besten Frequenzen von der jeweiligen Teilnehmerstation übertragen. In der Basisstation wird versucht, aus diesen Informationen eine bessere Zuordnung der Teilnehmerstationen auf Frequenzen zu bestimmen. Wird eine bessere Zuordnung gefunden, wird den betroffenen Teilnehmerstationen im nächsten Downlink-Burst ihre neue Frequenz zugewiesen. Weiter wird auf den Kontrollkanälen eine dispatch-table übertragen, welche ebenfalls die Zuordnung der Teilnehmer auf Frequenzen enthält.

Für die Anpassung der Datenrate werden einer Verbindung die entsprechende Anzahl an Frequenzen zugewiesen. Die FFT-Verarbeitung liefert sowieso bereits die detektierten Daten für alle Frequenzen, von denen die zugewiesenen Frequenzen ausgewählt werden müssen. Damit ist es auf der Empfangsseite in einfacher Weise durch eine leistungsfähigere Kanalcodierung möglich, die Datenrate zu erhöhen. Auf der Sendeseite müssen lediglich an mehrere Eingänge der IFFT Modulationsvektoren angelegt werden. Voraussetzung ist dann, daß ein linearer Leistungsverstärker eingesetzt wird.

Mit einer Auslegung, wie sie im vorstehend beschriebenen Ausführungsbeispiel vorgesehen ist, können von einer Basisstation 96 Teilnehmer mit 16 + 4 kbits/sec gleichzeitig versorgt werden. Werden allen Teilnehmern 4 Frequenzen zugewiesen, dann reduziert sich diese Zahl auf 24 Teilnehmer gleichzeitig mit 64 + 16 kbits/sec. Die gesamte Datenrate, welche von einer Basisstation über das air-interface abgewickelt wird, beträgt 2 Mbits/sec.

## Patentansprüche

1. Funkübertragungssystem mit mindestens einer ortsfesten Funkstation (BS) und mehreren beweglichen Funkstationen (Teilnehmergeräten) sowie Funkübertragungskanälen, **gekennzeichnet** durch ein intelligentes Frequenzsprungverfahren, bei dem für jede Übertragungsrichtung die optimalen Frequenzen für eine Übertragung von bzw. zu den Teilnehmerstationen bestimmt werden und eine entsprechende optimale Zuteilung der Frequenzen zu den Verbindungen erfolgt.

2. Funkübertragungssystem nach Anspruch 1, dadurch **gekennzeichnet,** daß von den Teilnehmerstationen regelmäßig eine Liste der am besten geeigneten Frequenzen durch Auswerten eines Teils oder aller von der Basisstation ausgestrahlter Frequenzen bestimmt und zur Basisstation übertragen wird und aus diesen Informationen eine geeignete Zuordnung der Frequenzen auf die einzelnen Verbindungen vorgenommen wird.

3. Funkübertragungssystem nach Anspruch 2, dadurch **gekennzeichnet,** daß beim Auffinden einer geeigneten Zuordnung der Frequenzen auf die einzelnen Verbindungen die Frequenzzuordnung der Teilnehmerstationen durch die Basisstation neu festgelegt wird.

4. Funkübertragungssystem nach einem der Ansprüche 1 bis 3, dadurch **gekennzeichnet,** daß die Verbindungen zwischen der Basisstation und den Teilnehmerstationen im Frequenzduplexverfahren betrieben werden und die optimale Frequenzzuteilung für wahlweise eine der beiden Übertragungsrichtungen oder beide Übertragungsrichtungen vorgenommen wird.

5. Funkübertragungssystem nach einem der Ansprüche 1 bis 3, dadurch **gekennzeichnet,** daß die Verbindungen zwischen der Basisstation und den Teilnehmerstationen im Zeitduplexverfahren betrieben werden und wahlweise eine optimale Frequenzzuordnung vorgenommen wird.

6. Funkübertragungssystem nach einem der Ansprüche 1 bis 5, dadurch **gekennzeichnet,** daß auf einem oder mehreren Kontrollkanälen eine Zuordnungstabelle übertragen wird mit der Zuordnung der Verbindungen zu den Teilnehmern auf Frequenzen.

7. Funkübertragungssystem nach einem der Ansprüche 1 bis 6, dadurch **gekennzeichnet,** daß die Übertragung in Form von Datenblöcken erfolgt, welche zumindest teilweise auf mehr als einer Frequenz übertragen werden.

8. Funkübertragungssystem nach einem der Ansprüche 1 bis 7, dadurch **gekennzeichnet,** daß wahlweise eine optimale Frequenzzuordnung bzw. ein systematisches Frequenzsprungverfahren verwendet wird.

9. Funkübertragungssystem nach einem der Ansprüche 1 bis 8, dadurch **gekennzeichnet,** daß als Optimierungskriterium der jeweilige Empfangspegel auf verschiedenen Frequenzen verwendet wird, welcher bei Einsatz einer Leistungsregelung um den entsprechenden Abregelungsfaktor wahlweise korrigiert wird.

10. Funkübertragungssystem nach einem der Ansprüche 1 bis 8, dadurch **gekennzeichnet,** daß als Optimierungskriterium die Übertragungsqualität auf der jeweiligen Frequenz verwendet wird, wobei bei Einsatz einer Leistungsregelung um den entsprechenden Abregelungsfaktor wahlweise korrigiert wird.

11. Funkübertragungssystem nach einem der Ansprüche 1 bis 8, dadurch **gekennzeichnet,** daß als Optimierungskriterium ein kombiniertes Empfangspegel- und Qualitätskriterium verwendet wird, wobei bei Einsatz einer Leistungsregelung um den entsprechenden Abregelungsfaktor wahlweise korrigiert wird.

12. Funkübertragungssystem nach einem der Ansprüche 1 bis 11, dadurch **gekennzeichnet,** daß zur Anpassung der Datenrate einer Verbindung die entsprechende Anzahl an Frequenzen zugewiesen wird, deren detektierte Daten aus einer FFT -Verarbeitung (fast fourier transform) gewonnen werden.

13. Funkübertragungssystem nach einem der Ansprüche 1 bis 12, dadurch **gekennzeichnet,** daß im Sender die Verkehrsdaten und eine verkehrsbezogene Signalisierung in einem Blockbilder zu Blöcken bestimmter Bitzahl zusammengefaßt werden und jeder Block um Tailbits erweitert wird.

14. Funkübertragungssystem nach Anspruch 13, dadurch **gekennzeichnet,** daß die Blöcke faltungskodiert und die faltungscodierten Blöcke mit Blockinterleaving zu Symbolen von je drei Bits zusammengefaßt werden.

15. Funkübertragungssystem nach Anspruch 14, dadurch **gekennzeichnet,** daß die Signalisierung zur Steuerung des Air-Interfaces mit einer bestimmten Anzahl von Symbolen von der Ablaufsteuerung geliefert und zwischen den Synchronisationssymbolen und den Nutzsymbolen eingefügt wird.

16. Funkübertragungssystem nach Anspruch 15, dadurch **gekennzeichnet,** daß der so gebildete Burst sequentiell über einen Multiplexer einer IFFT (inverse fast fourier transform) zugeführt wird, an deren Ausgang sich die jeweilige Frequenz ergibt.

17. Funkübertragungssystem nach Anspruch 16, dadurch **gekennzeichnet,** daß für reine Sprachübertragung nur jeweils eine Frequenz verwendet und nur an einen Eingang Vektoren angelegt werden.

18. Funkübertragungssystem nach einem der Ansprüche 1 bis 17, dadurch **gekennzeichnet,** daß zur Erstsynchronisation der Teilnehmerstationen sich die Teilnehmerstation den am besten zu empfangenden Kontrollkanal aussucht und anschließend eine Synchronisation auf den Symboltakt durchführt und sich auf das Rahmen-Timing aufsynchronisiert.

19. Funkübertragungssystem nach einem der Ansprüche 1 bis 18, **gekennzeichnet** durch eine PSK-Modulation mit einer Zusammenfassung von mehreren Bits zu einem Symbol, bei der die Modulation durch Ablage der komplexen Vektoren für die möglichen Symbole in einer Tabelle erfolgt.

20. Funkübertragungsverfahren nach einem der Ansprüche 1 bis 19, **gekennzeichnet** durch die Verwendung einer größeren Anzahl schmalbandiger Übertragungskanäle mit Meßmöglichkeiten für den Pegel und die Störungen auf allen Kanälen in jeder Teilnehmerstation.

21. Funkübertragungsverfahren nach einem der Ansprüche 1 bis 20, **gekennzeichnet** durch den Einsatz einer digitalen FFT (fast fourier transform) und IFFT (inverse fast fourier transform) auf der Empfangs- bzw. Sendeseite.

22. Funkübertragungssystem nach Anspruch 21, dadurch **gekennzeichnet,** daß die Umschaltung zwischen den Betriebsarten FFT und IFFT aus einer einzigen FFT-Hardware durch die Wahl eines Parameters erfolgt.

23. Funkübertragungssystem nach einem der Ansprüche 1 bis 22, dadurch **gekennzeichnet,** daß lediglich für das Uplink eine Leistungsregelung vorgesehen ist.

24. Funkübertragungssystem nach einem der vorhergehenden Ansprüche, **gekennzeichnet** durch den Einsatz bei Sprach- und Datenübertragungen, für ISDN und ATM.
